# EUROPÄISCHE PATENTANMELDUNG

(11) **EP 3 968 188 A1**
(43) Veröffentlichungstag der Anmeldung: **16.03.2022**
(21) Anmeldenummer: 20195412.0
(22) Anmeldetag: 10.09.2020
(51) Int. Cl.: G06F 21/30

(54) **VERFAHREN ZUM SICHEREN AUS- ODER EINSCHALTEN EINER ANLAGE**

(71) Anmelder: Siemens Mobility AG, 8304 Wallisellen (CH)
(72) Erfinder: HAUS, Andreas, 5430 Wettingen (CH)
(74) Vertreter: Deffner, Rolf

(57) **Zusammenfassung**

Es wird ein Verfahren offenbart zum sicheren Aus- oder Einschalten einer Anlage (10, 20) durch wenigstens eine Bedienperson (A, B, C), wobei das Aus- oder Einschalten - im folgenden Schalthandlung genannt - protokolliert wird und sich die Protokollierung auf die Schalthandlung sowie auf Identität und Berechtigung der die Schalthandlung veranlassenden Person bezieht. Die Schalthandlung wird von einem einer Bedienperson (A, B, C) zugeordneten Gerät (30, 30_{A}, 30_{C}, 31, 31_{B}) mittels einer an die Anlage (10, 20) zu übermittelenden Nachricht (41) ausgelöst. Die erfolgte Auslösung der Schalthandlung wird an das Gerät (30, 30_{A}, 30_{C}, 31, 31_{B}) mittels einer weiteren Nachricht (42) quittiert. Zur Sicherstellung der Rückverfolgbarkeit wird vom Gerät (30, 31) ein digitales Abbild der ausgelösten Schalthandlung an eine Blockchain (50) übermittelt und in der Blockchain (50) gespeichert.

## Beschreibung

Die vorliegende Erfindung bezieht sich auf ein Verfahren zum sicheren Aus- und Einschalten einer Anlage gemäss dem Patentanspruch 1 sowie auf eine Anordnung zur Durchführung dieses Verfahrens gemäss dem Patentanspruch 11.

Bei heutigen Sicherheitsschaltungen in Industrieanlagen wie zB Hochspannungsanlage, Liftanlage, Produktionsanlage muss jede Schalthandlung protokolliert werden. Eine die Schaltung betätigende Person ist haftbar für ihre Handlung mit ihrer Unterschrift. Diese Unterschrift wird meist über ein Papier vor Ort geleistet. Dieser Datenträger «Papier/Dokument» ist jedoch nicht sicher, da dieser weder redundant ist noch mehrfach gesichert werden kann. So kein ein solcher Datenträger entfernt oder ohne grossen Aufwand manipuliert werden. Die Schalthandlung wird mit einem Handschalter ausgeführt. Als zusätzliche Massnahme wird nach erfolgter Schaltung (Ausschalten) der Handschalter meist mit einem Schloss gegen Wiedereinschalten gesichert. Somit kann nur noch der Schlüsselträger die Anlage wieder einschalten. Es gibt eine erhebliche Anzahl von Anlagen, die ebenso gegen unbefugtes Ausschalten zu sichern sind, beispielsweise Energievorsorgungsanlagen.

Dieser physische Datenträger «Papier/Dokument» mit den geleisteten Unterschriften beinhaltet neben der relativ leichten Veränderbarkeit noch ein weiteres Problem. Bei einem Unfall oder Zwischenfall ist dieses Dokument sehr wichtig. Fehlt ein solches Dokument oder ist es nicht mehr auffindbar, haften Vorgesetzte wegen einem sogenannten Organisationsmangel.

Auch ein an einem Handschalter angebrachtes Schloss ist nicht unproblematisch. Nimmt der Schlüsselträger den Schlüssel zum vorgenannten Schloss versehentlich nach Hause oder ist der Schlüsselträger momentan nicht auffindbar, kann an einer solchen Anlage keine Schalthandlung mehr vorgenommen werden. Eine Mehrzahl von Schlüsseln zu diesem Schloss beinhaltet Haftungsprobleme.

Es besteht daher ein Bedarf, dieses Problem mit elektronischen und/der digitalen Technik zu lösen. In der Schrift WO 2016/026823 A1 [1] wird eine Schaltungsanordnung insbesondere für ein Sicherheits-IC-System eines Kernkraftwerks offenbar, das den bewährten diagrammzentrierten projektspezifischen Engineering-Ansatz der CPU-basierten Systemen beibehält und die Vorteile der FPGA-Technologie nutzt. Die erfindungsgemäße Schaltungsanordnung umfasst ein generisches FPGA und mindestens ein «programmable logic device» PLD, die als anwendungsspezifische Schaltmatrix arbeitet. Für kleinere Anlagen mit mobilem Zugang für Wartung ist dieser Ansatz jedoch nicht geeignet.

Der vorliegenden Erfindung liegt daher die Aufgabe zugrunde, ein Verfahren zum sicheren Aus- oder Einschalten einer Anlage anzugeben, das gegenüber dem Stand der Technik eine verbesserte und nachvollziehbare Sicherheit bietet, flexibel eingesetzt werden kann und welches Verfahren eine sichere Ablage der Protokolle der Schalthandlungen ermöglicht. Ebenso ist eine Anordnung zur Durchführung des vorgenannten Verfahrens anzugeben.

Diese Aufgabe wird durch das im Patentanspruch 1 angegebene Verfahren und durch die gemäss dem Patentanspruch 11 angegebene Anordnung gelöst. Vorteilhafte Ausgestaltungen der Erfindung sind in weiteren Ansprüchen angegeben.

Das erfindungsgemässe Verfahren zeichnet sich aus durch ein
Verfahren zum sicheren Aus- oder Einschalten einer Anlage durch wenigstens eine Bedienperson, wobei das Aus- oder Einschalten - im folgenden Schalthandlung genannt - protokolliert wird und sich die Protokollierung auf die Anlage, die Schalthandlung sowie auf Identität und Berechtigung der die Schalthandlung veranlassenden Bedienperson bezieht,
bei welchem Verfahren
- eine Schalthandlung von einem einer Bedienperson zugeordneten informationstechnologischen Gerät mittels einer in der Anlage zu übermittelenden Nachricht ausgelöst wird und die Auslösung der Schalthandlung an das Gerät mittels einer weiteren Nachricht (42) quittiert wird,
   und
- die Protokollierung durch Übermittlung eines digitalen Abbildes der ausgelösten Schalthandlung vom Gerät an eine Blockchain und durch Speicherung des digitalen Abbildes in der Blockchain erfolgt.

So ergeben sich für das erfindungsgemässe Verfahren die Vorteile:
i) Die Protokollierung der digitalen Abbilder der ausgelösten Schalthandlungen in einer Blockchain (genau in Knoten/Blöcken der Blockchain) ist fälschungssicher.
ii) Eine Blockchain ist abgesetzt, dh räumlich und logisch getrennt von den den Bedienpersonen zugeordneten Geräten und von den betreffenden Anlagen. Dadurch ist die Protokollierung auch bei Zwischenfällen, zB Explosionen in der Anlage sichergestellt und eine Rückverfolgbarkeit von ausgeführten Schalthandlung zu jedem Zeitpunkt sichergestellt.
iii) Mit der Angabe der Berechtigungen von Bedienpersonen bezüglich Schalthandlungen können diese Berechtigungen insoweit verfeinert werden, als nicht nur die Berechtigung für das Einschalten oder Ausschalten angegeben werden kann, sondern auch differenziertere Schalthandlungen.

Die informationstechnische Lösung mit der Nachricht für die Auslösung einer Schalthandlung, der Nachricht zur Quittierung einer Schalthandlung und der Verwendung eines Schlüssels erlauben eine differenzierte Rechteübergaben von einer Bedienperson zu einer weiteren Bedienperson. Dadurch wird ist das erfindungsgemässe Verfahren flexibel anpassbar. Das digitale Abbild einer erfolgten Rechteübergabe kann ebenfalls in einem Knoten/Block der Blockchain gespeichert werden. Dadurch kann bei einem Zwischenfall auch nachgewiesen werden, dass die die Schalthandlung auslösende Bedienperson die erforderliche Berechtigung hatte.

Ein weiterer Vorteil dieser informationstechnischen Lösung ist die (digitale) Identität der Bedienpersonen. Diese Identität kann beispielsweise festgelegt werden durch den Zugang mittels Kennung/Passwort oder mittels biometrischer Daten der betreffenden zugelassenen Bedienpersonen.

Diese informationstechnische Lösung hat weiter den Vorteil, dass die Administrierung der für Schalthandlungen an Anlagen berechtigten Personen zeitnah erfolgen kann, beispielsweise kann dadurch einer Person die Berechtigung sofort entzogen werden, selbst dann, wenn diese Person immer noch Zugriff auf ihr Bediengerät hat.

Die Erfindung wird nachfolgend anhand der Zeichnung beispielsweise näher erläutert. Dabei zeigen:
Figur 1 Vorgang zum Ausschalten einer Anlage;
Figur 2 Vorgang zum (Wieder-) Einschaltung einer Anlage;
Figur 3 Vorgang zur Übergabe eines Rechtes von einer Bedienperson A zu einer Bedienperson C.

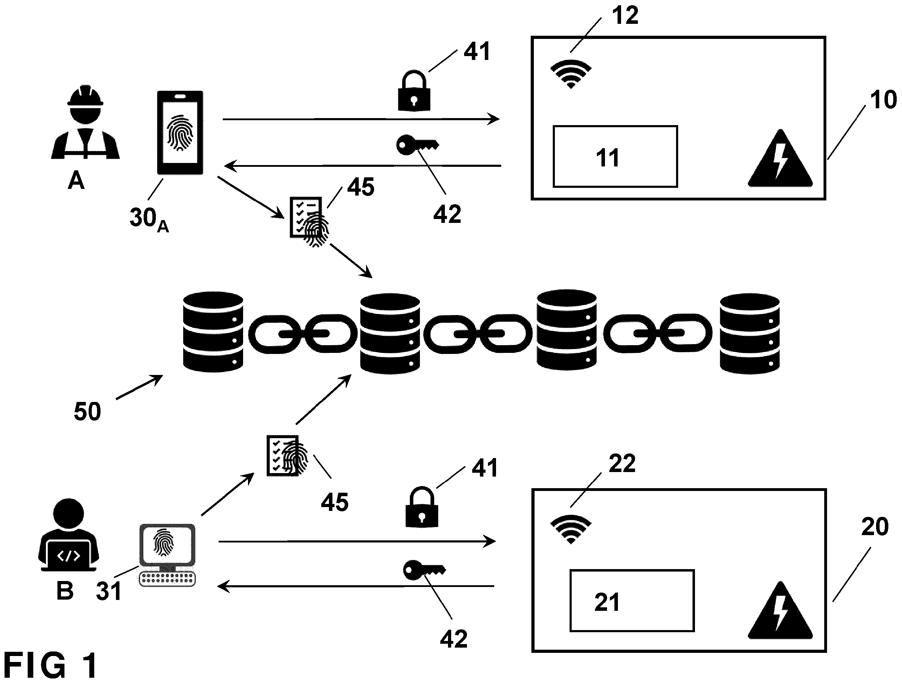

In einer Übersicht zeigt FIG 1 die für das Ausschalten einer Anlage 10 oder einer Anlage 20 involvierten Komponenten. Die Anlage 10 wird von einer Bedienperson A über ein dieser Person A zugeordnetes mobiles Gerät 30_{A} bedient. Die Anlage 20 wird von einer Bedienperson B über ein Arbeitsplatzgerät 30_{B} bedient, welches gemäss FIG 1 an einem stationären Ort ist, zB Kommandozentrale. Unter dem im nachfolgenden Kontext verwendeten Begriff «Bedienperson» fallen je nach Funktion dieser Person Servicetechniker, Anlagenverantwortlicher, Schaltingenieur oder User. Für die Erfindung und die Ausführungsbeispiele wird hier einheitlich der Begriff «Bedienpersonen» verwendet.

Unter den Begriff «Arbeitsplatzgeräte» 31 fallen Desktop Computer (zB Tower) oder Laptop Computer, die unter dem Begriff «informationstechnologisches Gerät» subsummiert werden, im Folgenden wird jedoch nur der Begriff «Gerät» verwendet. Diesen Geräten ist gemeinsam, dass mit einer Kennung einer Person eine eindeutige Zuordnung von Person zu einem Arbeitsplatzgerät 31 erfolgt. Ein mobiles Gerät 30 ist demgegenüber ein Smartphone oder ein sogenanntes Tablet. Die Abgrenzung mobiles Gerät zu Laptop ist fliessend. Dies ist für die vorliegenden Erfindung insoweit unerheblich, als für Arbeitsplatzgeräte 31 und mobile Geräte 30 als Oberbegriff «Bediengerät» oder auch nur wie vorstehend bereits eingeführt der Begriff «Gerät» benutzt wird. Die Zuordnung von Person zu einem «Gerät» (genau einer Anwendung/Session auf diesem Gerät) kann wie vorstehend dargestellt mit Kennung/Passwort erfolgen, ebenso sind äquivalente Verfahren wie zB Fingerprint oder andere biometrische Verfahren möglich. Auf diese Weise erhält die betreffende Person eine digitale ID bzw. digitale Signatur.

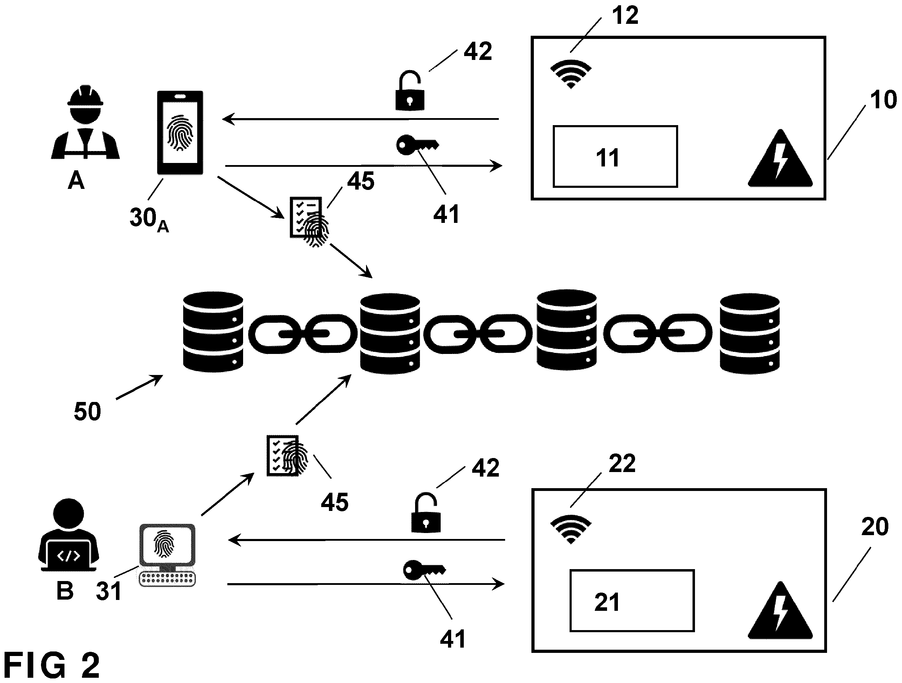

Das Verfahren zum Ausschalten einer Anlage 10 durch die Bedienperson A erfolgt durch Übermittlung einer Nachricht 41 vom Gerät 30_{A} an die Anlage 10. Die Art der physischen Übermittlung ist hier nicht relevant, diese kann über Mobilfunk, bluetooth, NFC aus Sicht des Gerätes 30_{A} erfolgen. Aus Sicht der Anlage 10 kann dies über ein entsprechendes Kommunikationsmodul 12 für bluetooth oder NFC oder über wired LAN oder WLAN erfolgen. Die Nachricht 41 enthält aus einer Anwendungssicht (nicht abschliessende Aufzählung):
- ID/Signatur der Person A,
- Zeitstempel,
- Befehl, also die Einzelheiten zum Ausschalten wie ggf. Adressierung, Umfang usw.
Durch eine Administrierung sind in einer jeden Anlage die zur Vornahme von Schalthandlungen berechtigten Personen mittels ihrer ID/Signatur gespeichert. Unter dem Begriff «Schalthandlung» sind das Ausschalten bzw. Einschalten einer Anlage subsummiert. Für die vorgenannte Administrierung wie auch zur Steuerung der Anlage 10 ist in FIG 1 eine Anwendung 11 dargestellt.
Als Antwort bzw. Quittierung auf diesen Befehl übermittelt die Anlage 10 (genau: ihre Anwendung 11 über das Kommunikationsmodul 12) einen Schlüssel 42 an das Gerät 30_{A}. Fehlt dieser Schlüssel 42, bedeutet dies, dass der mit der Nachricht 41 ausgesandte Ausschaltbefehl keine Wirkung hat. Dieser Schlüssel 42 dient dazu, zu einem späteren Zeitpunkt die Anlage 10 wieder einschalten zu können, siehe dazu die Ausführungen zur FIG 2. Im Fall einer erfolgten Quittierung wird vom Gerät 30_{A} eines digitales Abbild 45 der Schalthandlung an eine Blockchain 50 übermittelt und dort gespeichert. Dieses digitale Abbild 45 enthält aus einer Anwendungssicht (nicht abschliessende Aufzählung):
- ID/Signatur der Person A,
- Zeitstempel der Nachricht 41,
- Zeitstempel des Empfangs des Schlüssels 42,
- Schlüssel 42,
- ID der betreffenden Anlage,
- Befehl, also die Einzelheiten zum Ausschalten wie ggf. Adressierung, Umfang usw.
Durch die Eintragung dieses digitalen Abbildes 45 in einem Knoten/Block der Blockchain 50 ist sichergestellt, dass auf dieses digitale Abbild zu einem späteren Zeitpunkt zugegriffen werden kann und dabei die Authentizität dieses Abbildes 45 sichergestellt ist. Bezüglich Blockchain-Technologie und den entsprechenden Zugriffen wird auf das sehr detaillierte Dokument [2] "Mastering Blockchain" verwiesen.

In analoger Weise ist in FIG 1 das Ausschalten einer Anlage 20 durch eine Bedienperson B dargestellt. Unterschiedlich ist lediglich, dass die Person B für die Vornahme der Schalthandlung ein Arbeitsplatzgerät 31_{B} benutzt. Die Anlage 20 enthält wie die Anlage 10 ein Kommunikationsmodul (auch Anschlusseinheit genannt) 22 und eine Anwendung 21 für die Meldungsverkehrsverarbeitung und die Steuerung der Anlage 20.

In einer Übersicht zeigt FIG 2 die für das Einschalten einer Anlage 10 oder einer Anlage 20 involvierten Komponenten. Die Vorgänge sind die gleichen bezüglich Bedienperson A und ihre Anlage 10 bzw. Bedienperson B mit ihrem Gerät 31_{B} und «ihrer» Anlage 20. Die einzelnen Schritte werden daher nur für die Bedienperson B mit ihrer Anlage 20 erläutert. Für das Wiedereinschalten der Anlage 20 wird - ausgelöst durch die Bedienperson B - eine Nachricht 42 mit einem Schlüssel zum Wiedereinschalten an die Anlage 20 (Kommunikationsmodul 22, Anwendung 21) gesandt. Diese Nachricht 42 enthält aus einer Anwendungssicht (nicht abschliessende Aufzählung):
- ID/Signatur der Person A,
- Zeitstempel,
- der beim Ausschalten übermittelte der Bedienperson B zugeordnete Schlüssel,
- Befehl, also die Einzelheiten zum Einschalten wie ggf. Adressierung, Umfang usw.
In der Anwendung 21 wird vor Ausführung einer Schalthandlung an der Anlage 20 mindestens geprüft:
- Gültigkeit des Schlüssels,
- Berechtigung der Bedienperson B zur Vornahme von Schalthandlungen.
Darüber hinaus können weitere Bedingungen für das Einschalten geprüft werden, die zB abhängig sind vom Zustand der Anlage 20 oder vom Zeitpunkt.
Sind alle Bedingungen bei den vorgenannten Prüfung erfüllt, wird die Schalthandlung (hier Einschalten) ausgeführt und von der Anwendung 21 eine Nachricht 43 zur Quittierung an das Gerät 31_{B} übermittelt. Diese Nachricht 43 enthält aus einer Anwendungssicht (nicht abschliessende Aufzählung):
- ID der betreffenden Anlage,
- Zeitstempel des Empfangs des Befehls zur Vornahme einer Schalthandlung,
- Verwendeter Schlüssel
- Zeitstempel der Ausführung des Befehls zur Vornahme der Schalthandlung (=Einschalten).

Anschliessend wird vom Gerät 30_{B} ein digitales Abbild 45 der Schalthandlung an die Blockchain 50 übermittelt und dort in einem Knoten/Block gespeichert. Dieses digitale Abbild 45 enthält in entsprechender Weise die Komponenten, wie sie vorstehend nach dem erfolgten Ausschalten einer Anlage aufgeführt sind. Durch die Eintragung dieses digitalen Abbildes 45 des Einschaltens in der Blockchain 50 ist sichergestellt, dass auf dieses digitale Abbild zu einem späteren Zeitpunkt zugegriffen werden kann und dabei die Authentizität dieses Abbildes 45 sichergestellt ist.

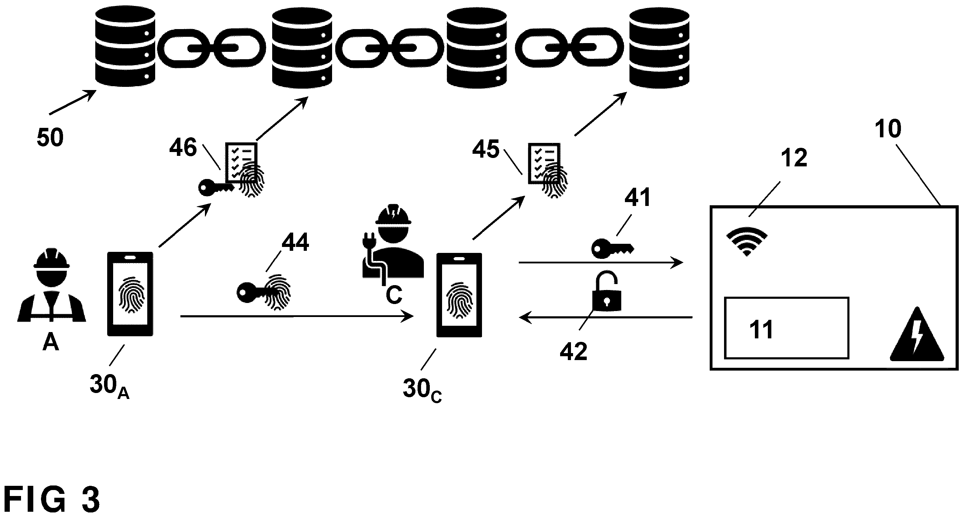

Eine starre Zuordnung eines Schlüssels zu einer Bedienperson kann in der Praxis Blockierungen verursachen, nämlich dann, wenn eine solche Bedienperson nicht handeln kann, zB wegen Einhaltung Ruhezeitregelung oder wenn diese Person aus IT-technischen Gründen vorübergehend keinen Zugriff auf das ihr zugewiesene Gerät 30, 31 hat oder das betreffende Gerät 30, 31 keine Verbindungen aufbauen kann. Dazu zeigt FIG 3 den Vorgang zur Übergabe eines Rechtes von einer Bedienperson A zu einer Bedienperson C. Vom der Bedienperson A zugeordneten Gerät 30_{A} wird einerseits eine sogenannte Rechteübergabe-Nachricht 44 für ein späteres Wiedereinschalten an das Gerät 30_{C} einer (stellvertretenden) Bedienperson C übermittelt. Diese Rechteübergabe-Nachricht 44 enthält aus einer Anwendungssicht (nicht abschliessende Aufzählung):
- ID/Signatur der Person A
- ID der betreffenden Anlage,
- der beim Ausschalten der Anlage 10 übermittelte zugeordnete(r) Schlüssel,
- Befehl, also die Einzelheiten zum Einschalten wie ggf. Adressierung, Umfang usw.
Vom der Bedienperson A zugeordneten Gerät 30_{A} wird andererseits ein digitales Abbild 46 einer erfolgten Rechteübergabe an einen Knoten/Block der Blockchain 50 übermittelt und dort gespeichert. Die Aussendung dieses digitalen Abbildes 46 kann abhängig gemacht werden von einer Quittierung des Erhalts einer Rechteübergabe an das der Person A zugeordnete Gerät 30_{A}. In der FIG 3 ist eine solche Quittierung vom Gerät 30_{C} zum Gerät 30_{A} nicht dargestellt.

Dieses digitale Abbild 46 enthält aus einer Anwendungssicht (nicht abschliessende Aufzählung):
- ID/Signatur der ihre Rechte transferierenden Bedienperson A,
- ID/Signatur der Bedienperson C, die ein Recht übertragen erhält,
- ID der betreffenden Anlage 10,
- der beim Ausschalten der betreffenden Anlage 10 übermittelte zugeordnete Schlüssel,
- Zeitstempel der Rechteübertragung.

Anschliessend kann die Bedienperson C mit der Nachricht 41 für eine Schalthandlung die entsprechende Schaltung in der Anlage 10 vornehmen. Aufgrund der vorstehend erläuterten Sicherung der Rechteübertragung ist in der Nachricht 41 die ID/Signatur der Person A enthalten. Für den auf einer anderen Schicht ablaufenden Meldungsverkehr bleibt das Gerät 30_{C} die sendende Einheit und die Nachricht zur Quittierungshandlung wird dementsprechend dem Gerät 30_{C} übermittelt.

Für die Eintragung von Berechtigungen von Personen A, B, C auf einer Anlage 10 oder Anlage 20 oder weiteren in den Figuren nicht dargestellten Anlagen kann die Blockchain 50 ebenfalls als Datenbasis benutzt werden. Eine Administrationsanwendung (ebenfalls nicht dargestellt in den Figuren) kann in der Blockchain 50 abgespeicherte Berechtigungen von Personen bezüglich Schalthandlungen an Anlagen an die betreffenden Anlagen verteilen. Je nach Anlagentyp kann es aber erforderlich sein, dass vor Ausführung einer Schalthandlungen die betreffende Anwendung auf der Anlage bei der Blockchain eine Verifikationsanfrage macht mit dem Zweck, eine mit einer Nachricht 41 für eine Schalthandlung die betreffende Person eine Berechtigung hat. Dieses Berechtigungskonzept lässt sich verfeinern auf die Art der Schalthandlung. Für die Implementierung einer solchen Verifikationsanfrage wird auf das Dokument [2] verwiesen.

### Liste der Bezugszeichen, Glossar

- 10: erste Anlage
- 11: Anwendung auf der ersten Anlage
- 12: Anschlusseinheit, Kommunikationsmodul

- 20: zweite Anlage
- 21: Anwendung auf der zweiten Anlage
- 22: Anschlusseinheit, Kommunikationsmodul

- 30: Mobiles Gerät, informationstechnologisches Gerät
- 30_{A}: Mobiles Gerät der Bedienperson A
- 30_{C}: Mobiles Gerät der Bedienperson C
- 31: Arbeitsplatzgerät, informationstechnologisches Gerät
- 31_{B}: Arbeitsgerät der Bedienperson B

- 41: Nachricht für eine Schalthandlung
- 42: Nachricht zur Quittierung einer Schalthandlung
- 44: Nachricht zur Rechteübergabe von der Bedienperson A auf die Bedienperson C, Rechteübergabe-Nachricht
- 45: Digitales Abbild einer Schalthandlung
- 46: Digitales Abbild einer Rechteübergabe

- 50: Blockchain

- A: Bedienperson vor Ort
- B: Bedienperson an einem abgesetzten Arbeitsplatz
- C: Bedienperson vor Ort, Ablösung von Person A

### Liste der zitierten Dokumente, Quellenangaben, Liste der verwendeten Akronyme

[1] WO 2016/026823 A1
   CIRCUIT ARRANGEMENT FOR A SEFETY I&C SYSTEM
   AREVA NP SAS, FR - 92400 Courbevoie
[2] Imran Bashir: "Mastering Blockchain" In: "Mastering Blockchain", 17 March 2017 (2017-03-17), Packt Publishing, XP055393678, ISBN: 978-1-78712-544-5

## Patentansprüche

1. Verfahren zum sicheren Aus- oder Einschalten einer Anlage (10, 20) durch wenigstens eine Bedienperson (A, B, C), wobei das Aus- oder Einschalten - im folgenden Schalthandlung genannt - protokolliert wird und sich die Protokollierung auf die Anlage, die Schalthandlung sowie auf Identität und Berechtigung der die Schalthandlung veranlassenden Bedienperson (A, B, C) bezieht,
**dadurch gekennzeichnet, dass**
- eine Schalthandlung von einem einer Bedienperson (A, B, C) zugeordneten informationstechnologischen Gerät (30, 30_{A}, 30_{C}, 31, 31_{B}) mittels einer in der Anlage (10, 20) zu übermittelenden Nachricht (41) ausgelöst wird und die Auslösung der Schalthandlung an das Gerät (30, 30_{A}, 30_{C}, 31, 31_{B}) mittels einer weiteren Nachricht (42) quittiert wird,
und
- die Protokollierung durch Übermittlung eines digitalen Abbildes (45) der ausgelösten Schalthandlung vom Gerät (30, 31) an eine Blockchain (50) und durch Speicherung des digitalen Abbildes in der Blockchain (50) erfolgt.

2. Verfahren zum sicheren Aus- oder Einschalten einer Anlage (10, 20) nach Anspruch 1,
**dadurch gekennzeichnet, dass**
zur Ausführung der Verfahrensschritte pro Anlage (10, 20) eine in der Anlage implementierte Anwendung (11, 21) vorgesehen ist.

3. Verfahren zum sicheren Aus- oder Einschalten einer Anlage (10, 20) nach Anspruch 1 oder 2,
**dadurch gekennzeichnet, dass**
in der das Ausschalten quittierenden Nachricht (42) ein Schlüssel enthalten ist, der berechtigt, ein Einschalten der betreffenden Anlage nur dann auszulösen, wenn dieser gleiche Schlüssel in der Nachricht (41) für das Einschalten enthalten ist.

4. Verfahren zum sicheren Aus- oder Einschalten einer Anlage (10, 20) nach Anspruch 3,
**dadurch gekennzeichnet, dass**
(A) vom den Schlüssel empfangenden Gerät (30_{A}) eine Rechteübergabe-Nachricht (44) an das Gerät (30_{C}) einer weiteren Bedienperson (C) übermittelt wird, wobei die Rechteübergabe-Nachricht (44) den Schlüssel enthält, damit vom Gerät (30_{C}) der weiteren Bedienperson (C) ein Einschalten der betreffenden Anlage (10) auslösbar ist;
und dass
(B) vom den Schlüssel empfangenden Gerät (30_{A}) ein digitales Abbild (46) einer mit der Rechteübergabe-Nachricht (44) veranlassen Rechteübergabe an einen Knoten/Block der Blockchain 50 übermittelt und zur Protokollierung dort gespeichert wird.

5. Verfahren zum sicheren Aus- oder Einschalten einer Anlage (10, 20) nach Anspruch 3,
**dadurch gekennzeichnet, dass**
der Verfahrensschritt (B) nur dann ausgeführt wird, wenn vom an das die Rechteübergabe-Nachricht (44) übermittelnde Gerät (30_{A}) eine Quittierungsnachricht auf die Rechteübergabe-Nachricht (44) übermittelt wird.

6. Verfahren zum sicheren Aus- oder Einschalten einer Anlage (10, 20) nach einem der Ansprüche 1 bis 5,
**dadurch gekennzeichnet, dass**
in der Anlage (10, 20) die Identitäten der zu Schalthandlungen berechtigten Bedienpersonen (A, B, C) gespeichert sind und in der übermittelten Nachricht (41) die Identität der eine Schalthandlung auszuführenden Person (A, B, C) enthalten ist und die Schalthandlung nur dann ausgeführt wird, wenn die Identität der eine Schalthandlung ausführenden Person A, B, C) in den in der Anlage (10, 20) gespeicherten Identitäten vorhanden ist.

7. Verfahren zum sicheren Aus- oder Einschalten einer Anlage (10, 20) nach Anspruch 6,
**dadurch gekennzeichnet, dass**
die Speicherung der Identität der eine Schalthandlung auszuführenden Bedienperson (A, B, C) durch eine Abfrage der Berechtigung dieser Person (A, B, C) durch eine Anwendung der betreffenden Anlage in der Blockchain (50) erfolgt.

8. Verfahren zum sicheren Aus- oder Einschalten einer Anlage (10, 20) nach Anspruch 6,
**dadurch gekennzeichnet, dass**
die Speicherung der Identitäten der zu Schalthandlungen berechtigten Bedienpersonen (A, B, C) in der Anlage durch eine Administrierungsanwendung erfolgt.

9. Verfahren zum sicheren Aus- oder Einschalten einer Anlage (10, 20) nach einem der Ansprüche 1 bis 8,
**dadurch gekennzeichnet, dass**
das im in der Blockchain (50) gespeicherten Digitalen Abbild 45, 46) eine Identität der betreffenden Bedienperson (A, B, C) enthalten ist, die durch eine der Bedienperson (A, B, C) zugeordnete Kennung oder durch biometrische Daten der Bedienperson (A, B, C) festgelegt ist.

10. Verfahren zum sicheren Aus- oder Einschalten einer Anlage (10, 20) nach Anspruch 9,
**dadurch gekennzeichnet, dass**
pro Identität der betreffenden Bedienperson (A, B, C) individuelle Schalthandlungen festgelegt sind.

11. Anordnung (10, 20, 30, 31, 50) zur Durchführung des Verfahrens zum sicheren Aus- oder Einschalten einer Anlage,
**dadurch gekennzeichnet, dass**
die Anordnung (10, 20, 30, 31, 50) wenigstens ein informationstechnologischen Gerät (30, 30_{A}, 30_{C}, 31, 31_{B}), wenigstens eine Anlage (10, 20) und eine Blockchain (50) umfasst und eine pro Anlage implementierte Anwendung (11, 12) aufweist, die die gemäß den in den Ansprüchen 1 bis 10 angegebenen Verfahrensschritte durchführen.
